(19) Europäisches Patentamt
European Patent Office
Office européen des brevets

(11) EP 3 150 657 A1

(12) **EUROPEAN PATENT APPLICATION**
published in accordance with Art. 153(4) EPC

(43) Date of publication:
**05.04.2017 Bulletin 2017/14**

(21) Application number: **15799942.6**

(22) Date of filing: **29.05.2015**

(51) Int Cl.:
***C08J 7/04*** *(2006.01)* ***B32B 27/30*** *(2006.01)*

(86) International application number:
**PCT/JP2015/065555**

(87) International publication number:
**WO 2015/182744 (03.12.2015 Gazette 2015/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **30.05.2014 JP 2014111806**
**11.11.2014 JP 2014228518**

(71) Applicant: **Mitsubishi Rayon Co., Ltd.**
**Tokyo 100-8253 (JP)**

(72) Inventors:
- **YAMAZAWA Hideto**
**Otake-shi**
**Hiroshima 739-0693 (JP)**
- **OKAFUJI Hiroshi**
**Otake-shi**
**Hiroshima 739-0693 (JP)**
- **KAWAI Osamu**
**Otake-shi**
**Hiroshima 739-0693 (JP)**

(74) Representative: **Merkle, Gebhard**
**Ter Meer Steinmeister & Partner**
**Patentanwälte mbB**
**Nymphenburger Straße 4**
**80335 München (DE)**

(54) **RESIN PRODUCT**

(57) A resin product which has a surface water contact angle of at least 90 and a pencil hardness of at least 8H.

*FIG. 1*

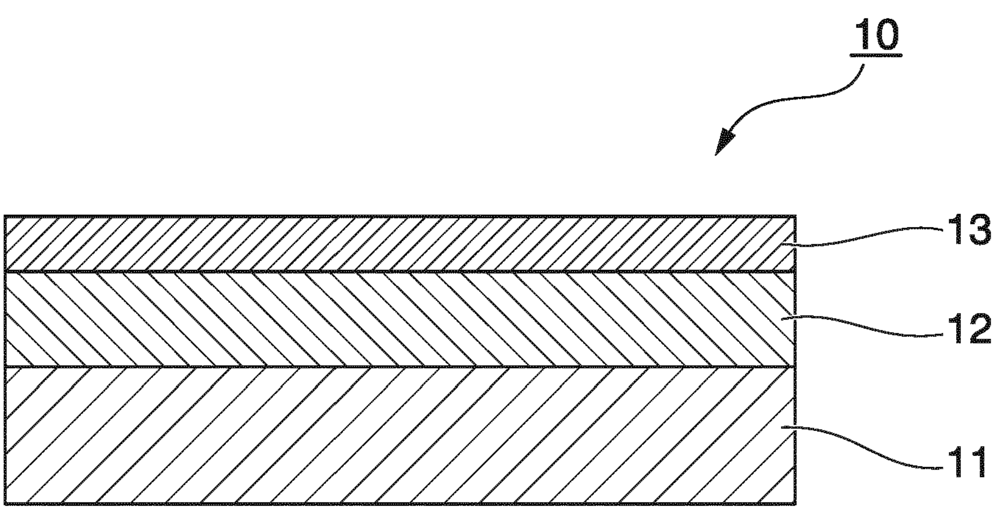




Printed by Jouve, 75001 PARIS (FR)

## Description

TECHNICAL FIELD

The present invention relates to a Resin product.

Priority is claimed on Japanese Patent Application No. No. 2014-111806 filed in the Japanese Patent Office on May 30, 2014 and the prior Japanese Patent Application No. 2014-228518 filed in the Japanese Patent Office on November 11, 2014, the content of which is incorporated herein by reference.

BACKGROUND ART

Hitherto, glass or a resin product exhibiting transparency has been used as a front plate for a display in order to protect the surface of various kinds of displays such as a CRT display device, a liquid crystal television, and a cellular phone. In addition, a touch panel display has been often employed in recent years.

Glass which exhibits excellent excoriation resistance and has an excellent surface hardness is used as a front panel for a display to be used in a touch panel display. It is required to decrease the thickness of glass in order to meet low cost and light weight in the case of using glass as a front panel for a display. However, thin glass is likely to crack, and it is thus investigated to use a resin product by which low cost and light weight can be realized as a front plate for a display. In addition, it is investigated to use a resin plate which exhibits excellent design workability as a front panel for a display as there is also a case in which front panels for a display having various shapes are required in recent years.

However, a resin product exhibiting transparency is likely to be damaged by scratching or the like since it is softer as compared to glass. In addition, dirt is conspicuous when dirt such as fingerprints, sebum, sweat, and cosmetics is attached to the front panel for a display, and it is also difficult to remove the dirt. Hence, antifouling property is currently required in addition to excellent excoriation resistance or an excellent surface hardness as the performance of a resin product.

As a technique for improving the excoriation resistance, surface hardness, and antifouling property, for example, there is a technique to provide an antifouling layer on a cured film containing inorganic fine particles such as silica by using a fluorine-based silane coupling agent (JP 2002-190136 A). In addition, a technique to form a layer of a fluorine compound exhibiting a hydrophilic property and oil repellency on a light curable primer layer (JP 2001-270050 A) and a technique to form a layer by using a composition containing a radiation curable silicone resin (JP 11-29720 A) are disclosed. In addition, as a technique for improving the antifouling property of the surface of a resin plate, for example, a technique to use an active energy ray curable resin composition containing a four or higher functional (meth)acrylate compound, a trifunctional (meth)acrylate compound, and a urethane (meth)acrylate compound having a perfluoroalkyl group or perfluoropolyether is disclosed (JP 2012-250353 A).

However, in the technique of JP 2002-190136 A, although the surface hardness and antifouling property are obtained, there is a problem that the antifouling durability is insufficient since the adhesive property between the cured film and the antifouling layer is insufficient. In the technique of JP 2001-270050 A, although the adhesive property between the light curable primer layer and the layer of a fluorine compound is sufficient, the surface hardness of the layer of a fluorine compound is insufficient since the hardness of the light curable primer layer is insufficient. In the technique of JP 11-29720 A, the antifouling property is insufficient as compared to a known fluorine-based additive. In the technique of JP 2012-250353 A, the excoriation resistance and antifouling property can be met, but the surface hardness cannot be said sufficient, and further improvement is thus required.

An object of the invention is to provide a resin product which has an excellent surface hardness and exhibits excellent water repellency and adhesive property. Another object of the invention is to provide a resin product which exhibits excellent excoriation resistance and antifouling durability.

DISCLOSURE OF INVENTION

This objects are achieved by the following invention [1] to [20].

[1] A resin product, in which a surface of the resin product has a water contact angle of 90 degrees or more and a pencil hardness of 8H or more.
[2] The resin product according to [1], including a cured film on a surface.
[3] The resin product according to [1] or [2], in which a residual rate of a cured film by a cross-cut peeling test conducted in conformity to ISO 2409: 1992 is 80% or more.
[4] The resin product according to [1] or [2], in which the resin product is a resin product including a cured film (A) on the whole or a portion of a surface of a resin substrate and a cured film (B) on a surface facing a surface in contact with the resin substrate of the cured film (A), and the surface having a water contact angle of 90 degrees

or more and a pencil hardness of 8H or more is a surface of the cured film (B).

[5] A resin product including a cured film (A) on the whole or a portion of a surface of a resin substrate and a cured film (B) on a surface facing a surface in contact with the resin substrate of the cured film (A), in which a surface of the cured film (B) has a water contact angle of 90 degrees or more, a surface of the cured film (B) has a pencil hardness of 7H or more, and a residual rate of the cured film (A) and the cured film (B) by a cross-cut peeling test conducted in conformity to ISO 2409: 1992 is 80% or more.

[6] The resin product according to [4] or [5], in which the resin product satisfies the following Equations (1) and (2):

$$3 \leq At/Bt \leq 80 \quad \cdots \quad (1)$$

$$20\ \mu m \leq At \leq 40 \leq \mu m \quad \cdots \quad (2)$$

(where At denotes the thickness of the cured film (A) and Bt denotes the thickness of the cured film (B)).

[7] The resin product according to any one of [1] to [6], in which a water contact angle decreasing rate calculated by the following Equation (3-1) after a surface of the resin product is excoriated back and forth 1000 times with a paper wiper at a pressure of 110 g/cm2 is 10% or less:

$$\text{Water contact angle decreasing rate} \quad (\%) = (A1 - B1)/A1 \times 100 \cdots \quad (3\text{-}1)$$

(where A1 denotes the water contact angle (°) of the surface before excoriation and B1 denotes the water contact angle (°) of the surface after excoriation).

[8] The resin product according to any one of [1] to [7], in which a water contact angle decreasing rate calculated by the following Equation (3-2) after a surface of the resin product is excoriated back and forth 1000 times with #000 steel wool at a pressure of 110 g/cm2 is 15% or less:

$$\text{Water contact angle decreasing rate} \quad (\%) = (A2 - B2)/A1 \times 100 \cdots \quad (3\text{-}2)$$

(where A2 denotes the water contact angle (°) of the surface before excoriation and B2 denotes the water contact angle (°) of the surface after excoriation).

[9] The resin product according to any one of [1] to [8], in which a surface of the resin product has the Martens hardness of 215 N/mm2 or more and nIT calculated by the following Equation (4) is 70% or more.

$$\text{nIT } (\%) = (\text{workload of elastic deformation})/(\text{workload of elastic deformation} + \text{workload of plastic deformation}) \times 100 \quad \cdots \quad (4)$$

[10] The resin product according to any one [1] to [9], in which a surface of the resin product has a triolein contact angle of 50 degrees or more.

[11] The resin product according to any one of [1] to [10], in which a surface of the resin product has a water contact angle of 100 degrees or more.

[12] The resin product according to any one of [1] to [11], in which the resin product has antireflection performance.

[13] The resin product according to any one of [4] to [12], in which the cured film (B) is a cured film (B) obtained by curing a curable composition (b) containing a compound (b1) having a (meth)acryloyloxy group in the molecule, a fluorine-containing compound (b2) having an active energy ray reactive group, and a polymerization initiator (b4).

[14] The resin product according to [13], in which the compound (b1) having a (meth)acryloyloxy group in the molecule is a compound having three or more (meth)acryloyloxy groups in th molecule.

[15] The resin product according to [13] or [14], in which the compound (b1) having a (meth)acryloyloxy group in the molecule is urethane (meth)acrylate.

[16] The resin product according to any one of [13] to [15], in which the fluorine-containing compound (b2) having an active energy ray reactive group is perfluoropolyether (meth)acrylate.

[17] The resin product according to any one of [13] to [16], in which the fluorine-containing compound (b2) having an active energy ray reactive group is from 0.1 to 10 parts by mass with respect to 100 parts by mass of the compound

(b1) having a (meth)acryloyloxy group in the molecule.
[18] The resin product according to any one of [13] to [17], in which the curable composition (b) contains a (b2) component at from 0.1 to 10 parts by mass with respect to 100 parts by mass of a (b1) component.
[19] The resin product according to any one of [13] to [18], in which the resin product is a resin product in which the curable composition (b) further contains a compound (b3) having an amino group and the curable composition (b) contains a (b3) component at from 1 to 15 parts by mass with respect to 100 parts by mass of a component (b1).
[20] The resin product according to any one of [13] to [19], in which the resin product is a resin product in which the cured film (A) is a cured film obtained by curing a curable composition (a) containing a monomer (a1) having a (meth)acryloyloxy group, a compound (a2) having two or less (meth)acryloyl groups in the molecule, and a polymerization initiator (a3) and the curable composition (a) contains a component (a1) at 55 parts by mass or more and 90 parts by mass or less with respect to 100 parts by mass of a total amount of the (a) component and a (a2) component.

Incidentally, in the invention, the term "(meth)acrylate" means at least one kind selected from an "acrylate" and a "methacrylate", and the term "(meth)acryloyloxy group" means at least one kind selected from an "acryloyloxy group" and a "methacryloyloxy group".
The invention provides a resin product which has an excellent surface hardness and exhibits excellent water repellency and adhesive property. Moreover, an object of the invention is to provide a resin product which exhibits excellent excoriation resistance and antifouling durability.

## BRIEF DESCRIPTION OF DRAWINGS

Fig. 1 is a schematic cross-sectional diagram illustrating an embodiment of a resin product of the invention.

## BEST MODE FOR CARRYING OUT THE INVENTION

In the resin product of the invention, the whole or a portion of the surface of the resin product has a water contact angle of 90 degrees or more and a pencil hardness of 8H or more. Incidentally, in the invention, the pencil hardness is a value obtained in conformity to ISO 2409: 1992.
In the resin product of the invention, it is preferable that the residual rate of the cured film by a cross-cut peeling test conducted in conformity to ISO 2409: 1992 is 80% or more.
An aspect of the resin product of the invention is a resin laminate which includes a cured film (A) on the whole or a portion of the surface of a resin substrate and a cured film (B) on the surface (hereinafter, also referred to as the first surface of the cured film (A)) facing the surface in contact with the resin substrate of the cured film (A).
In the first aspect of the resin product of the invention, the surface facing the surface in contact with the cured film (A) of the cured film (B), namely the surface (hereinafter, also referred to as the first surface of the cured film (B)) of the cured film (B) has a water contact angle of 90 degrees or more, and the first surface of the cured film (B) has a pencil hardness of 8H or more.
In the second aspect of the resin product of the invention, the first surface of the cured film (B) has a water contact angle of 90 degrees or more and a pencil hardness of 7H or more and the residual rate of the cured film (A) and the cured film (B) by a cross-cut peeling test conducted in conformity to ISO 2409: 1992 is 80% or more.
The shape of the resin product is not limited, the resin product may have a block shape or a sheet shape, but a sheet shape is more preferable. To have a sheet shape is, for example, to have a thickness of from 0.05 to 20 mm. The first surface of the cured film (B) has a pencil hardness of preferably from 7H to 9H and more preferably from 8H to 9H.
The contact angle of water or triolein can be determined by dropping water or triolein on the surface of the resin product by from 0.1 mL to 1 mL and using a contact angle meter.

### <Resin substrate>

Examples of the resin substrate constituting the resin product of the invention may include a polyolefin resin, a (meth)acrylic resin, an epoxy resin, a polyimide resin, a phenol resin, a polyester resin, and a polycarbonate resin. As the resin substrate, a plurality of the resins may be laminated.
As the resin substrate constituting the resin product, one in which the content of a (meth)acrylic resin with respect to the resin constituting the resin substrate is from 90 to 100% by mass is preferable and one in which the content is 100% by mass is even more preferable from the viewpoint of transparency. In addition, the (meth)acrylic resin is preferably a polymer containing a methyl methacrylate unit as a main component. The polymer containing a methyl methacrylate unit as a main component is preferably a polymer containing a methyl methacrylate unit at from 50 to 100% by mass with respect to the entire constitutional units constituting the (meth)acrylic resin, more preferably a polymer

containing a methyl methacrylate unit at from 80 to 100% by mass, and even more preferably a polymer containing a methyl methacrylate unit at 100% by mass.

In a case in which the (meth)acrylic resin is a polymer containing a methyl methacrylate unit as a main component, examples of a monomer which constitutes the (meth)acrylic resin and is copolymerizable with the methyl methacrylate, namely, a monomer constituting the (meth)acrylic resin other than the methyl methacrylate may include a (meth)acrylic acid ester such as methyl acrylate, ethyl (meth)acrylate, isopropyl (meth)acrylate, n-butyl (meth)acrylate, iso-butyl (meth)acrylate, tert-butyl (meth)acrylate, 2-ethylhexyl (meth)acrylate, phenyl methacrylate, or benzyl methacrylate; an unsaturated carboxylic acid such as (meth)acrylic acid, maleic acid, or itaconic acid; an unsaturated carboxylic acid anhydride such as anhydrous maleic acid or anhydrous itaconic acid; a maleimide such as N-phenylmaleimide or N-cyclohexylmaleimide; a hydroxyl group-containing vinyl monomer such as 2-hydroxyethyl (meth)acrylate or 2-hydroxypropyl (meth)acrylate; a vinyl ester such as vinyl acetate or vinyl benzoate; vinyl chloride, vinylidene chloride, and any derivative thereof; a nitrogen-containing vinyl monomer such as (meth)acrylamide or (meth)acrylonitrile; an epoxy group-containing monomer such as glycidyl (meth)acrylate; and an aromatic vinyl monomer such as styrene or $\alpha$-methylstyrene. Among these, n-butyl acrylate, tert-butyl methacrylate, and isobornyl (meth)acrylate are preferable from the viewpoint of decreasing the water absorption rate of the resin substrate.

In addition, examples of a monomer which constitutes the (meth)acrylic resin and is copolymerizable with the methyl methacrylate, namely, a monomer constituting the (meth)acrylic resin other than the methyl methacrylate may include an alkane-diol di(meth)acrylate such as ethylene glycol di(meth)acrylate, 1,2-propylene glycol di(meth)acrylate, 1,3-butylene glycol di(meth)acrylate, or 1,6-hexanediol di(meth)acrylate; a polyoxyalkylene glycol di(meth)acrylate such as diethylene glycol di(meth)acrylate, dipropylene glycol di(meth)acrylate, triethylene glycol di(meth)acrylate , tetraethylene glycol di(meth)acrylate, polyethylene glycol di(meth)acrylate, or neopentyl glycol di(meth)acrylate; a vinyl monomer having two or more ethylenically unsaturated bonds in the molecule such as divinylbenzene; an unsaturated polyester prepolymer obtained from at least one kind of polycarboxylic acid including an ethylenically unsaturated a polycarboxylic acid and at least one kind of diol; and a vinyl ester prepolymer obtained through acrylic-modification of the terminal of an epoxy group. Among these, neopentyl glycol dimethacrylate is preferable from the viewpoint of improving the heat resistance of the resin sheet.

The (meth)acrylic resin containing a methyl methacrylate unit as a main component can be obtained by polymerizing a raw material for the resin substrate. Examples of the raw material for the resin substrate may include one containing a mixture of a radically polymerizable monomer in which the content of methyl methacrylate is from 50 to 100 parts by mass and the content of a monomer copolymerizable with methyl methacrylate is from 0 to 50 parts by mass.

In addition, as the raw material for the resin substrate, it is possible to use a syrup obtained by partially polymerizing a mixture of a radically polymerizable monomer in which the content of methyl methacrylate is from 50 to 100 parts by mass and the content of a monomer copolymerizable with methyl methacrylate is from 0 to 50 parts by mass. In other words, the syrup is a mixture of a partial polymer and the unpolymerized radically polymerizable monomer.

In addition, as the raw material for the resin substrate, it is possible to use a syrup obtained by dissolving a (meth)acrylic resin obtained from a monomer raw material having a composition that is the same as or different from that of a mixture of a radically polymerizable monomer in this mixture of a radically polymerizable monomer. In other words, the syrup is a mixture of a (meth)acrylic resin and a radically polymerizable monomer.

It is possible to add a polymerization initiator to the raw material for the resin substrate.

Examples of the polymerization initiator may include an organic peroxide such as methyl ethyl ketone peroxide, benzoyl peroxide, dicumyl peroxide, t-butyl hydroperoxide, cumene hydroperoxide, t-butyl peroxyoctoate, t-butyl peroxybenzoate, or lauroyl peroxide; an azo compound such as azobisisobutyronitrile or azobisdimethylvaleronitrile; and a redox polymerization initiator obtained by combining an amine such as N,N-dimethylaniline or N,N-dimethyl-p-toluidine with the peroxide described above.

The amount of the polymerization initiator added is preferably from 0.005 to 5 parts by mass with respect to 100 parts by mass of the radically polymerizable monomer in the raw material for the resin substrate.

It is possible to add various kinds of additives such as a coloring agent, a mold release agent, an antioxidant, a stabilizer, a flame retardant, an impact modifier, a light stabilizer, an ultraviolet absorber, a polymerization inhibitor, and a chain transfer agent to the raw material for the resin substrate if necessary.

Examples of the polymerization method of the raw material for the resin substrate may include a bulk polymerization method, a solution polymerization method, an emulsion polymerization method, and a suspension polymerization method, but a bulk polymerization method is preferable from the viewpoint of the production cost of the (meth)acrylic resin composition, an environmental load due to the use of a solvent, and the productivity and transparency of the (meth)acrylic resin molded body.

The thickness of the resin substrate is preferably from 0.1 mm to 10 mm and more preferably from 0.3 mm to 3 mm.

Incidentally, the thickness of the resin substrate in the present application refers to an average value obtained by measuring the distance from the top face to the bottom face at five arbitrary places by using a caliper.

<Cured film (A)>

As an aspect of the invention, the cured film (A) is one constituent which constitutes the resin laminate of the invention and one that is formed on the first surface of the resin substrate.

The cured film (A) can be obtained, for example, by curing a coating film of a curable composition (a) to be described later.

Examples of the method for forming the cured film (A) may include a method in which the curable composition (a) is coated on the surface of the resin substrate and the curable composition (a) is then cured by heating the coating film of the curable composition (a) or irradiating the coating film with an active energy ray.

The cured film (A) can be laminated on the first surface or the first and second surfaces of the resin substrate, and it can be selected depending on the purpose. The second surface of the resin substrate refers to the surface facing the first surface of the resin substrate in the resin substrate.

Examples of the method for coating the curable composition (a) on the surface of the resin substrate may include a casting method, a roller coating method, a bar coating method, a spray coating method, and an air knife coating method.

Examples of the method for laminating the cured film (A) on the surface of the resin substrate may include the following two methods.

(1) A method in which a coating film of the curable composition (a) is formed on the surface of the resin substrate and the curable composition (a) is then cured.

(2) A method in which a pattern in which the cured film (A) is laminated on the surface of a mold by forming a coating film of the curable composition (a) on the surface of the mold and then curing the curable composition (a) and another pattern are disposed so that they face each other and the cured film (A) is in the inside to obtain a laminated mold, the raw material for the resin substrate is poured into the laminated mold, the raw material for the resin substrate is then subjected to cast polymerization, and the two molds are removed.

Between the above methods, the method of (2) is preferable from the viewpoint of obtaining the cured film (A) having a high pencil hardness.

Upon curing of the curable composition (a), it is preferable to cover the surface of the coating film of the curable composition (a) with a resin film from the viewpoint of obtaining the cured film (A) having a favorable appearance without defects due to foreign matters and the like. In addition, it is preferable to subject the resin film face to a smoothing treatment by using a roll such as a rubber roll having a hardness of 40□ in conformity to JIS K 6253 after covering the surface of the curable composition (a) with a resin film. By the smoothing treatment using a roll, it is possible to obtain the cured film (A) having a more uniform film thickness and there is a tendency that a cured film having the desired film thickness and high smoothness can be obtained. In addition, in the case of using the active energy ray curable composition as the curable composition (a), there is a tendency that a cured film having a favorable degree of cure is obtained as the crosslinking reaction of the curable composition (a) sufficiently proceeds by irradiating the curable composition (a) with an active energy ray after covering the surface of the curable composition (a) with a resin film, and the excoriation resistance and surface hardness of the cured film (A) tend to be favorable.

Examples of the resin film may include a polyethylene terephthalate (PET) film, a polypropylene (PP) film, a polyethylene (PE) film, and a polyvinylidene fluoride (PVDF) film. Among these, a PET film is preferable from the viewpoint of the cost and curing property of the curable composition (a).

The thickness of the resin film is preferably from 8 to 125 μm from the viewpoint of the strength, handling property, and cost of the resin film.

In the case of curing the curable composition (a) by an active energy ray, examples of the active energy ray may include an electron beam, ultraviolet light, and visible light, and ultraviolet light is preferable from the viewpoint of equipment cost or productivity.

Examples of the light source of the active energy ray may include a fluorescent ultraviolet lamp, an ultrahigh pressure mercury lamp, a high pressure mercury lamp, a medium pressure mercury lamp, a low pressure mercury lamp, a metal halide lamp, an Ar laser, a He-Cd laser, a solid laser, a xenon lamp, a high frequency induction mercury lamp, and sunlight. Among these, a fluorescent ultraviolet lamp and a high pressure mercury lamp are preferable from the viewpoint of curing rate of the curable composition (a). The accumulated light quantity of the active energy ray is preferably from 5 to 2,000 $mJ/cm^2$.

In the invention, the cured film (A) is preferably one that has a surface having a hardness of from 7 to 9H as the pencil hardness from the viewpoint of the excoriation resistance and surface hardness the resin laminate. Incidentally, in the invention, the pencil hardness is a value obtained in conformity to J ISO 2409: 1992.

The film thickness of the cured film (A) is preferably from 20 to 45 μm, more preferably from 25 to 40 μm, and even more preferably from 25 to 35 μm. The excoriation resistance and surface hardness the cured film are favorable

when the film thickness is 20 μm or more. In addition, it is possible to suppress cracking at the time of cutting of the resin product and the generation of cracks on the cured film at the time of handling of the resin product and processability is favorable when the film thickness is 40 μm or less. The lower limit value of the film thickness of the cured film (A) is preferably 25 μm, and the upper limit value of the film thickness is preferably 35 μm. In other words, the film thickness of the cured film is preferably from 25 to 35 μm.

The film thickness of the cured film (A) here means the film thickness of the cured film (A) in the resin product.

Incidentally, the thickness of the cured film (A) refers to an average value obtained by observing the cross section of a target cut in the vertical direction by using a transmission electron microscope and measuring the distance from the top face to the bottom face at five arbitrary places.

<Curable composition (a)>

In the invention, the curable composition (a) is a raw material to be used for obtaining the cured film (A).

Examples of the curable composition (a) may include a composition containing an (a1) component, an (a2) component and a polymerization initiator (a3).

((a1) component)

In the invention, the (a1) component is one of the constitutional components of the curable composition (a).

Examples of the (a1) component may include a monomer having a (meth)acryloyloxy group, and examples thereof may include a monomer having three or more and 20 or fewer (meth)acryloyloxy groups.

Specific examples of the (a1) component may include a monomer in which the residue to bond to each (meth)acryloyloxy group is a hydrocarbon group or a derivative thereof, and it is possible to contain a bond such as an ether bond, a thioether bond, an ester bond, an amide bond, or a urethane bond in the molecule thereof.

Specific examples of the (a1) component may include an ester obtained from one or more moles of a polyhydric alcohol and three or more moles of (meth)acrylic acid or a derivative thereof and a linear ester obtained from a polyhydric alcohol, a polycarboxylic acid or an anhydride thereof, and (meth)acrylic acid or a derivative thereof.

Incidentally, the term "polyhydric alcohol" here means an alcohol having two or more hydroxyl groups in the molecule.

The term "polycarboxylic acid" means a carboxylic acid having two or more carboxyl groups in the molecule.

The term "derivative of (meth)acrylic acid" means a compound in which a hydrogen atom in (meth)acrylic acid is substituted with another functional group.

The term "linear" means straight-chain or branched-chain.

Examples of the ester obtained from one or more moles of a polyhydric alcohol and three or more moles of (meth)acrylic acid or a derivative thereof may include trimethylolpropane tri(meth)acrylate, trimethylolethane tri(meth)acrylate, ethylene oxide adduct trimethylolpropane tri(meth)acrylate, propylene oxide adduct trimethylolpropane tri(meth)acrylate, ditrimethylolpropane tetra(meth)acrylate, pentaglycerol tri(meth)acrylate, pentaerythritol tri(meth)acrylate, pentaerythritol tetra(meth)acrylate, glycerin tri(meth)acrylate, dipentaerythritol tri(meth)acrylate, dipentaerythritol tetra(meth)acrylate, tripentaerythritol tetra(meth)acrylate, ethylene oxide adduct pentaerythritol tetra(meth)acrylate, dipentaerythritol penta(meth)acrylate, dipentaerythritol hexa(meth)acrylate, caprolactone adduct dipentaerythritol penta(meth)acrylate, and caprolactone adduct dipentaerythritol hexa(meth)acrylate.

Preferred combination examples of a polyhydric alcohol, a polycarboxylic acid or an anhydride thereof, and (meth)acrylic acid or a derivative thereof in the linear ester obtained from a polyhydric alcohol, a polycarboxylic acid or an anhydride thereof, and (meth)acrylic acid or a derivative thereof may include malonic acid/trimethylolethane/(meth)acrylic acid, malonic acid/trimethylolpropane/(meth)acrylic acid, malonic acid/glycerine/(meth)acrylic acid, malonic acid/pentaerythritol/(meth) acrylic acid, succinic acid/trimethylolethane/(meth) acrylic acid, succinic acid/trimethylolpropane/(meth)acrylic acid, succinic acid/glycerine/(meth)acrylic acid, succinic acid/pentaerythritol/(meth) acrylic acid, adipic acid/trimethylolethane/(meth)acrylic acid, adipic acid/trimethylolpropane/(meth)acrylic acid, adipic acid/glycerine/(meth)acrylic acid, adipic acid/pentaerythritol/(meth)acrylic acid, glutaric acid/trimethylolethane/(meth)acrylic acid, glutaric acid/trimethylolpropane/(meth)acrylic acid, glutaric acid/glycerine/(meth)acrylic acid, glutaric acid/pentaerythritol/(meth)acrylic acid, sebacic acid/trimethylolethane/(meth)acrylic acid, sebacic acid/trimethylolpropane/(meth)acrylic acid, sebacic acid/glycerine/(meth)acrylic acid, sebacic acid/pentaerythritol/(meth)acrylic acid, fumaric acid/trimethylolethane/(meth)acrylic acid, fumaric acid/trimethylolpropane/(meth)acrylic acid, fumaric acid/glycerine/(meth)acrylic acid, fumaric acid/pentaerythritol/(meth) acrylic acid, itaconic acid/trimethylolethane/(meth)acrylic acid, itaconic acid/trimethylolpropane/(meth)acrylic acid, itaconic acid/glycerine/(meth)acrylic acid, itaconic acid/pentaerythritol/(meth)acrylic acid, anhydrous maleic acid/trimethylolethane/(meth) acrylic acid, anhydrous maleic acid/trimethylolpropane/(meth)acrylic, anhydrous maleic acid/glycerin/(meth)acrylic acid, and anhydrous maleic acid/pentaerythritol/(meth)acrylic acid.

Other examples of the (a1) component may include a urethane (meth)acrylate obtained by reacting three or

more moles of an acrylic monomer having active hydrogen such as 2-hydroxyethyl (meth)acrylate, 2-hydroxypropyl (meth)acrylate, 2-hydroxy-3-methoxypropyl (meth)acrylate, N-methylol (meth)acrylamide, or N-hydroxy (meth)acrylamide with one or more moles of a polyisocyanate represented by the following Formula (I); poly[(meth)acryloyloxyethyl] isocyanurate such as tri(meth)acrylate of tris(2-hydroxyethyl)isocyanuric acid; epoxy poly(meth) acrylate; and urethane poly(meth)acrylate.

[Chem. 1]

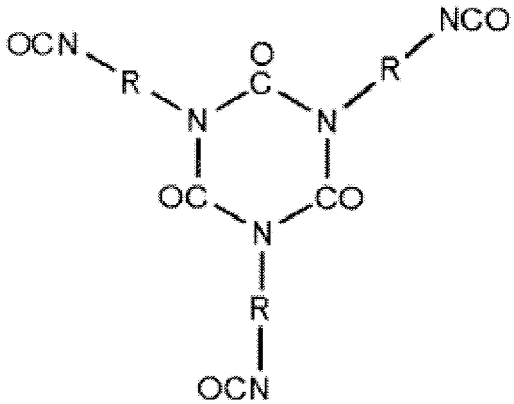

(I)

(In Formula (I), R represents a divalent hydrocarbon group which may contain a substituent and has from 1 to 12 carbon atoms.)

As the polyisocyanate represented by Formula (I), a polyisocyanate obtained through trimerization of an isocyanate compound such as trimethylolpropane tolylene diisocyanate, hexamethylene diisocyanate, tolylene diisocyanate, diphenylmethane diisocyanate, xylene diisocyanate, 4,4'-methylenebis(cyclohexyl isocyanate), isophorone diisocyanate, or trimethylhexamethylene diisocyanate is preferable.

As the (a1) component, among the above ones, one kind of monomer may be used singly or two or more kinds of monomers may be used in combination.

As the (a1) component, pentaerythritol tri(meth)acrylate, pentaerythritol tetra(meth)acrylate, dipentaerythritol penta(meth)acrylate, and dipentaerythritol hexa(meth)acrylate are more preferable from the viewpoint of the excoriation resistance and surface hardness of the cured film (A).

The content of the (a1) component is preferably from 55 parts by mass or more and 90 parts by mass or less, more preferably 60 parts by mass or more and 85 parts by mass or less, and even more preferably 65 parts by mass or more and 75 parts by mass or less with respect to 100 parts by mass of the total amount of the (a1) component and the (a2) component. The excoriation resistance and surface hardness of the cured film (A) to be described later tend to be favorable in a case in which the content of the (a1) component is 50 parts by mass or more. In addition, in a case in which the content of the (a1) component is 90 parts by mass or less, there is a tendency that the cure shrinkage rate when curing the curable composition (a) decreases, the crack resistance of the cured film (A) is favorable, and the adhesive property of the cured film (A) to the resin substrate is favorable.

The (a1) component may be used singly or in combination of two or more kinds thereof.

((a2) component)

In the invention, the (a2) component is one of the constitutional components of one example of the curable composition (a).

Examples of the (a2) component may include a compound having two or less (meth)acryloyl groups in the molecule.

Examples of the (a2) component may include the following ones.

Examples of a (meth)acrylate compound having two (meth)acryloyl groups in the molecule may include ethylene glycol di(meth)acrylate, dicyclopentenyl di(meth)acrylate, triethylene glycol di(meth)acrylate, tetraethylene glycol di(meth)acrylate, polyethylene glycol di(meth)acrylate, trimethylolpropane di(meth)acrylate, ethylene oxide-modified trimethylolpropane di(meth)acrylate, tripropylene glycol di(meth)acrylate, neopentyl glycol di(meth)acrylate, 1,4-butanediol di(meth)acrylate, 1,6-hexanediol di(meth)acrylate, polyester di(meth)acrylate, polyethylene glycol di(meth)acrylate, tricyclodecanedimethylol di(meth)acrylate, hydroxypivalic acid neopentyl glycol di(meth)acrylate, bisphenol A polyethoxy(meth)acrylate, 1,10-decanediol di(meth)acrylate, and hydroxypivalic acid neopentyl glycol di(meth)acrylate.

Examples of a compound having one (meth)acryloyl group in the molecule may include isobornyloxyethyl (meth)acrylate, isobornyl (meth)acrylate, 2-ethylhexyl (meth)acrylate, ethyl diethylene glycol (meth)acrylate, lauryl (meth)acrylate, dicyclopentadiene (meth)acrylate, dicyclopentenyloxyethyl (meth)acrylate, dicyclopentenyl (meth)acrylate, N,N-dimethyl (meth)acrylamide, tetrachlorophenyl (meth)acrylate, 2-tetrachlorophenoxyethyl (meth)acrylate, tetrahydrofurfuryl (meth)acrylate, tetra-bromophenyl (meth)acrylate, 2-tetrabromophenoxyethyl (meth)acrylate, 2-trichlorophenoxyethyl (meth)acrylate, tribromophenyl (meth)acrylate, 2-tribromophenoxyethyl (meth)acrylate, 2-hydroxyethyl (meth)acrylate, 2-hydroxypropyl (meth)acrylate, 2-hydroxybutyl (meth)acrylate, phenoxyethyl (meth)acrylate, butoxyethyl (meth)acrylate, pentachlorophenyl (meth)acrylate, pentabromophenyl (meth)acrylate, polyethylene glycol mono(meth)acrylate, polypropylene glycol mono(meth)acrylate, bornyl (meth)acrylate, methyl triethylene diglycol (meth)acrylate, 1,4-butanediol mono(meth)acrylate, 2-ethylhexylpolyoxy (meth)acrylate, benzyl (meth)acrylate, phenyloxyethyl (meth)acrylate, tricyclodecane mono(meth)acrylate, 2-hydroxy-3-phenyloxy-propyl (meth)acrylate, 3-hydroxy-3-phenoxypropyl (meth)acrylate, 2-(meth)acryloyloxyethyl succinate, 2-(meth)acryloyloxyethyl hexahydrophthalic acid, ethoxy diethylene glycol (meth)acrylate, methoxy triethylene glycol (meth)acrylate, and 2-methacryloyloxyethyl-2-hydroxyethyl phthalate.

The (a2) component may be used singly or in combination of two or more kinds thereof.

Among these, 1,6-hexanediol di(meth)acrylate is preferable from the viewpoint of enhancing the adhesive property between the cured film (A) and the resin substrate.

The content of the (a2) component is preferably from 10 parts by mass or more and 50 parts by mass or less, more preferably 15 parts by mass or more and 40 parts by mass or less, and even more preferably 25 parts by mass or more and 35 parts by mass or less with respect to 100 parts by mass of the total amount of the (a1) component and the (a2) component. In a case in which the content of the (a2) component is 10 parts by mass or more, there is a tendency that the cure shrinkage rate when curing the curable composition (a) decreases, the crack resistance of the cured film (A) is favorable, and the adhesive property of the cured film (A) to the resin substrate is favorable. In addition, there is a tendency that it is possible to suppress the warpage of the resin laminate in which the cured film (A) is laminated on the surface of the resin substrate. Furthermore, the excoriation resistance and surface hardness of the cured film (A) tend to be favorable in a case in which the content of the (a2) component is 50 parts by mass or less.

(Polymerization initiator (a3))

The polymerization initiator (a3) is one of the constitutional components of one example of the curable composition (a).

Examples of the polymerization initiator (a3) may include a thioxanthone such as benzophenone, 4,4'-bis(diethylamino)benzophenone, 2,4,6-trimethylbenzophenone, methyl o-benzoylbenzoate, 4-phenylbenzophenone, t-butylanthraquinone, 2-ethylanthraquinone, 2,4-diethylthioxanthone, isopropyl thioxanthone, or 2,4-dichlorothioxanthone; an acetophenone such as diethoxyacetophenone, 2-hydroxy-2-methyl-1-phenylpropan-1-one, benzyl dimethyl ketal, 1-hydroxycyclohexyl-phenyl ketone, 2-methyl-2-morpholino(4-thiomethylphenyl)propane-1- one, or 2-benzyl-2-dimethylamino-1-(4-morpholinophenyl)-butanone; a benzoin ether such as benzoin methyl ether, benzoin ethyl ether, benzoin isopropyl ether, or benzoin isobutyl ether; an acylphosphine oxide such as 2,4,6-trimethylbenzoyldiphenylphosphine oxide, bis(2,6-dimethoxybenzoyl)-2,4,4-trimethylpentylphosphine oxide, or bis(2,4,6-trimethylbenzoyl)- phenylphosphine oxide; methylbenzoyl formate; 1,7-bisacridinylheptane; and 9-phenylacridine.

These may be used singly or in combination of two or more kinds thereof.

The amount of the polymerization initiator (a3) added is preferably from 0.1 to 10 parts by mass and more preferably from 0.1 to 5 parts by mass with respect to 100 parts by mass of the total amount of the (a1) component and the (a2) component from the viewpoint of promoting the curing property of the cured film (A).

The curable composition (a) can contain various kinds of additives such as an organic solvent, a mold release agent, a lubricant, a plasticizer, an antioxidant, an antistatic agent, a light stabilizer, an ultraviolet absorber, a flame retardant, a flame retardant auxiliary, a polymerization inhibitor, a filler, a pigment, a dye, a silane coupling agent, a leveling agent, an antifoaming agent, a fluorescent agent, and a chain transfer agent if necessary.

<Cured film (B)>

As an aspect of the invention, the cured film (B) is one constituent which constitutes the resin laminate of the invention and one that is formed on the surface facing the surface in contact with the resin substrate of the cured film (A) laminated on the first surface of the resin substrate.

In the cured film (B), the contact angle of water with respect to the surface facing the surface in contact with the cured film (A) of the cured film (B) is 90 degrees or more, and the cured film (B) has a surface having a hardness of from 7 to 9H as the pencil hardness.

It is possible to improve the water repellency and antifouling durability of the resin laminate by setting the contact

angle of water with respect to the surface of the cured film (B) to 90 degrees or more.

In addition, by setting the pencil hardness of the surface of the cured film (B) to from 7 to 9H, it is possible to suppress the generation of scratches on the surface of the resin product due to the pawl of a finger or the like and to obtain a resin product exhibiting favorable excoriation resistance. The pencil hardness is preferably from 8H to 9H.

The film thickness of the cured film (B) is from 0.5 to 6 μm. The excoriation resistance and surface hardness of the cured film are favorable in a case in which the film thickness is 0.5 μm or more. In addition, the adhesive property of the cured film (B) with the cured film (A) is improved in a case in which the film thickness is 6 μm or less. The lower limit value of the film thickness of the cured film (B) is preferably from 0.6 μm, and the upper limit value of the film thickness is preferably 4 μm. In other words, the film thickness of the cured film (B) is preferably from 0.6 μm to 4 μm.

The film thickness of the cured film here means the film thickness of the cured film (B) in the resin product. Incidentally, the thickness of the cured film (B) refers to an average value obtained by observing the cross section of a target cut in the vertical direction by using a transmission electron microscope and measuring the distance from the top face to the bottom face at five arbitrary places.

In addition, in the invention, it is preferable that the film thickness of the cured film (A) and the film thickness of the cured film (B) satisfy the following Equation (1).

$$3 \leq At/Bt \leq 80 \quad \cdots \quad (1)$$

(where At denotes the thickness of the cured film (A) and Bt denotes the thickness of the cured film (B)).

The cured film (B) can be obtained, for example, by curing the coating film of a curable composition (b) to be described later.

In the invention, in a case in which the cured film (A) is laminated on the first and second surfaces of the resin substrate, the cured film (B) may be laminated on only the cured film (A) laminated on the first surface of the resin substrate or on both cured films (A) laminated on the first and second surfaces of the resin substrate, and it can be selected depending on the purpose.

Examples of the method for forming the cured film (B) may include a method to form the cured film (B) by coating the curable composition (b) on the surface of the cured film (A) and then curing the curable composition (b) by heating the coating film of the curable composition (b) or irradiating the coating film with an active energy ray.

Examples of the method for coating the curable composition (b) on the surface of the cured film (A) may include the same methods as the coating method of the curable composition (a).

<Curable composition (b)>

In the invention, the curable composition (b) is a raw material to be used for obtaining the cured film (B).

Examples of the curable composition (b) may include a composition containing a (b1) component, a (b2) component, and a polymerization initiator (b4) or a composition containing a (b2) component, a (b3) component, and a polymerization initiator (b4).

((b1) component)

In the invention, the (b1) component is one of the constitutional components of one example of the curable composition (b).

Examples of the (b1) component may include the same ones as the (a1) and (a2) components. These may be used singly or in combination of two or more kinds thereof.

As the (b1) component, trimethylolpropane triacrylate, ditrimethylolpropane tetra(meth)acrylate, pentaerythritol tri(meth)acrylate, pentaerythritol tetra(meth)acrylate, dipentaerythritol penta(meth)acrylate, dipentaerythritol hexa(meth)acrylate, and a urethane (meth)acrylate having three or more (meth)acryloyloxy groups from the viewpoint of improving the curing property and excoriation resistance of the curable composition (b). Among these, a urethane (meth)acrylate having three or more (meth)acryloyloxy groups is preferable and a urethane (meth)acrylate having six or more (meth)acryloyloxy groups is more preferable from the viewpoint of improving the excoriation resistance and improving the adhesive property of the cured film (B) with the cured film (A).

The (b1) component may be used singly or in combination of two or more kinds thereof.

((b2) component)

In the invention, the (b2) component of a fluorine-containing compound having an active energy ray reactive

group is one of the constitutional components of one example of the curing composition (b).

The (b2) component of a fluorine-containing compound having an active energy ray reactive group is not particularly limited, and it is possible to use a known fluorine-containing compound having an active energy ray reactive group.

Examples of the commercially available product of the (b2) component may include the "OPTOOL DAC-HP" (trade name) manufactured by DAIKIN INDUSTRIES, Ltd., the "Fluorolink MD500" (trade name), "Fluorolink MD700" (trade name), and "Fluorolink 5105X" (trade name), "Fluorolink 5101X" (trade name) manufactured by Solvay, the "MEGAFACE RS-75" (trade name) and "MEGAFACE RS-76-NS" (trade name) manufactured by DIC Corporation, the "Viscoat 17F" (trade name) of heptadecafluorodecyl acrylate manufactured by OSAKA ORGANIC CHEMICAL INDUSTRY LTD., the "Light Acrylate FA-108" (trade name) of perfluorooctylethyl acrylate manufactured by KYOEISHA CHEMICAL Co., LTD., and the "16-FDA" (trade name) of 1,10-bis(meth)acryloyloxy-2,2,3,3,4,4,5,5,6,6,7,7,8,8,9,9-hexadecafluorodecane manufactured by KYOEISHA CHEMICAL Co., LTD.

The (b2) component is preferably a perfluoropolyether (meth)acrylate from the viewpoint of improving the water repellency, oil repellency, and durability of the cured film (B).

The (b2) component is, for example, a monomer having a group having at least one perfluoropolyether unit and at least one (meth)acryloyloxy group.

Examples of the perfluoropolyether unit may include $-[CF_2CF_2O]-$ and $-[CF_2O]-$.

The water repellency and oil repellency are imparted to the surface of the cured film (B) by the presence of a group having a perfluoropolyether unit.

As the (b2) component, one having two or more (meth)acryloyloxy groups in the molecule is preferable from the viewpoint of enhancing the water repellency and durability of the cured film (B).

The (b2) component may be used singly or in combination of two or more kinds thereof.

The content of the (b2) component is preferably from 0.1 to 10 parts by mass and more preferably from 0.25 to 4 parts by mass with respect to 100 parts by mass of the (b1) component. In a case in which the content of the (b2) component is 0.1 part by mass or more, there is a tendency that the contact angle of the cured film (B) is 90 degrees or more and wiping of dirt such as fingerprints, sebum, sweat, and cosmetics can be facilitated. The excoriation resistance and surface hardness of the cured film (B) tend to be favorable in a case in which the content of the (b2) component is 10 parts by mass or less.

((b3) component)

In the invention, the (b3) component is one of the constitutional components of one example of the curing composition (b) for forming the cured film (B).

The (b3) component is a compound having an amino group, and examples thereof may include a silane compound having an amino group and a (meth)acrylate having an amino group.

Examples of the silane compound having an amino group may include

N-2-(aminoethyl)-3-aminopropylmethyldimethoxysilane,
N-2-(aminoethyl-3-aminopropyltrimethoxysilane, and
N-2-(aminoethyl)-3-aminopropyltriethoxysilane.

Examples of the (meth)acrylate having an amino group may include acrylamide, 7-amino-3,7-dimethyloctyl (meth)acrylate, t-octyl(meth)acrylamide, diacetone(meth)acrylamide, dimethylaminoethyl (meth)acrylate, diethylaminoethyl (meth)acrylate, N,N-dimethyl(meth)acrylamide, N,N-diethylaminoethyl (meth)acrylate, tetra-chlorophenyl (meth)acrylate, N-vinylformamide, N-n-butoxymethyl(meth)acrylamide, N-isobutoxymethyl(meth)acrylamide, N-methoxymethyl(meth)acrylamide, and (meth)acryloylmorpholine.

These may be used singly or in combination of two or more kinds thereof.

The content of the (b3) component is preferably from 1 to 15 parts by mass and more preferably from 2.2 to 10 parts by mass with respect to 100 parts by mass of the (b1) component. The adhesive property of the cured film (B) to the cured film (A) tends to be favorable in a case in which the content of the (b3) component is 1 part by mass or more. The excoriation resistance and surface hardness of the cured film (B) tend to be favorable in a case in which the content of the (b3) component is 15 parts by mass or less.

(Polymerization initiator (b4))

The polymerization initiator (b4) is one of the constitutional components of one example of the curable composition (b).

Examples of the polymerization initiator (b4) may include the same ones as the polymerization initiator (a3).

These may be used singly or in combination of two or more kinds thereof.

The amount of the polymerization initiator (b4) added is preferably from 0.1 to 10 parts by mass with respect to 100 parts by mass of the total amount of the (b1) component and the (b2) component from the viewpoint of promoting the curing property of the cured film (B).

In the invention, it is possible to add at least one kind of compound selected from a compound having one or two (meth)acryloyloxy groups in the molecule and an organic solvent to the curable composition (b) for the purpose of decreasing the viscosity thereof.

Examples of the compound having one or two (meth)acryloyloxy groups in the molecule may include the same ones as the (a2) component. These may be used singly or in combination of two or more kinds thereof.

Examples of the organic solvent may include a non-fluorinated solvent such as a hydrocarbon-based solvent and a fluorine-containing solvent.

Examples of non-fluorinated solvent may include a ketone such as methyl ethyl ketone, acetone, or methyl isobutyl ketone; an alcohol such as a monohydric alcohol such as ethanol, 1-propanol, 2-propanol, butanol, or 1-methoxy-2-propanol or a polyhydric alcohol such as ethylene glycol, diethylene glycol, or propylene glycol; an ester such as ethyl acetate, butyl acetate, or γ-butyrolactone; an ether such as diethylene glycol monomethyl ether, diethylene glycol monomethyl ether acetate, tetrahydrofuran, or 1,4-dioxane; an aromatic hydrocarbon such as toluene or xylene; and an amide such as dimethylformamide, dimethylacetamide, or N-methylpyrrolidone.

Specific examples of the fluorine-containing solvent may include a fluorine-containing alcohol, a fluorine-containing ether, a hydrofluorocarbon, and ditrifluoromethylbenzene.

Specific examples of the fluorine-containing alcohol may include compounds represented by $H(CF_2)_m(CH2)_n$-OH, $F(CF_2)o(CH_2)p$-OH, $F(CF_2)_qCH=CHCH_2OH$, and $F(CF_2)_rCH_2CH(I)CH_2OH$. Incidentally, m, n, o, p, q, and r in the above formulas each independently represent an integer from 1 to 8.

Specific examples of the fluorine-containing ether may include a compound represented by $R^{21}$-O-$R^{22}$. Incidentally, $R^{21}$ and $R^{22}$ in the above formula each independently represent a straight-chain or branched alkyl group having from 1 to 10 carbon atoms, and at least either of $R^{21}$ or $R^{22}$ contains a fluorine atom.

Examples of the fluorine-containing ether may include a hydrofluoroalkyl ether. In addition, examples of a commercially available product of the fluorine-containing ether may include the "HE-7100" (trade name) and "HFE-7200" (trade name) manufactured by 3M.

Specific examples of the hydrofluorocarbon may include hydrofluorocarbons having a chain structure and a cyclic structure.

Examples of a commercially available product of the hydrofluorocarbon may include the "Vertrel HFC43-10mee" (trade name) manufactured by Du Pont-Mitsui Fluorochemicals Co., Ltd. and the "Zeorora H" (trade name) manufactured by ZEON CORPORATION.

Specific examples of the ditrifluoromethylbenzene may include o-ditrifluoromethylbenzene, m-ditrifluoromethylbenzene, p-ditrifluoromethylbenzene, and any mixture thereof.

The organic solvents may be used singly or in combination of two or more kinds thereof.

In the invention, the curable composition (b) can contain various kinds of additives such as a mold release agent, a lubricant, a plasticizer, an antioxidant, an antistatic agent, a light stabilizer, an ultraviolet absorber, a flame retardant, a flame retardant auxiliary, a polymerization inhibitor, a filler, a pigment, a dye, a defoaming agent, a fluorescent agent, and a chain transfer agent if necessary.

(Inorganic fine particles (b5))

In addition, in the invention, it is possible to add the inorganic fine particles (b5) to be described later to the curable composition (b) for the purpose of improving the adhesive property of the cured film (B) to the cured film (A).

Examples of the inorganic fine particles (b5) may include inorganic particles such as amorphous silica, crystalline silica, silica-alumina composite oxide, kaolinite, talc, calcium carbonate (calcite type, vaterite type), zeolite, alumina, and hydroxyapatite, heat-resistant polymer particles such as cross-linked acrylic particles, cross-linked PMMA particles, cross-linked polystyrene particles, nylon particles, polyester particles, benzoguanamine-formalin condensate particles, benzoguanamine-melamine-formaldehyde condensate particles and melamine-formaldehyde condensate particles, and organic-inorganic hybrid fine particles such as a silica-acrylic composite compound.

Examples of the shape of the inorganic fine particles (b5) may include a spherical shape, a massive shape, a plate shape, a fibrous shape, and a flaky shape, but among these, spherical particles are preferable from the viewpoint of dispersibility or of being difficult for the particles to drop out when being brought into contact with another member.

Examples of the inorganic fine particles (b5) may include those having an average particle size of from 1 to 300 nm. The average particle size of the inorganic fine particles (b5) is preferably from 3 to 100 nm from the viewpoint of dispersibility.

The average particle size is a value measured in conformity to JIS Z 8825-1 by using the particle size distribution

measuring apparatus SALD-7100 (product name, manufactured by Shimadzu Corporation).

(Silicone-based leveling agent (b6))

In addition, in the invention, it is possible to add a silicone-based leveling agent (b6) to be described later to the curable composition and (b) for the purpose of decreasing the surface defects of the cured film (B). It is possible to adjust the surface tension of the curable composition (b) by adding the silicone-based leveling agent (b6).
Examples of the silicone-based leveling agent (b6) may include the POLYFLOW KL-401 and POLYFLOW KL-403 (both of them are trade names, manufactured by KYOEISHA CHEMICAL Co., LTD.), the BYK-300, BYK-306, BYK-310, BYK -320, BYK-322, BYK-325, BYK-331, BYK-333, BYK-345, BYK-378, and BYK-UV 3505 (all of them are trade names, manufactured by BYK), and the KP-323, KP-326, and KP-341 (all of them are trade names, manufactured by Shin-Etsu Chemical Co., Ltd.).
Among these, it is preferable to select at least one silicone-based leveling agent selected from aralkyl-modified polymethylsiloxane, polyether-modified polymethylsiloxane, polyether-modified dimethylpolysiloxane, dimethylpolysiloxane having an acrylic group.

<Resin product>

The resin product of the invention is a resin product which includes a cured film (A) on the first surface of the resin substrate and a cured film (B) on the surface facing the surface in contact with the resin substrate of the cured film (A).
In the resin product of the invention, the residual rate of the cured film (A) and the cured film (B) by a cross-cut peeling test conducted in conformity to ISO 2409: 1992 is preferably 80% or more, more preferably 90% or more, and even more preferably 100%.
The excoriation resistance of the resin laminate is favorable in a case in which the residual rate of the cured film (A) and the cured film (B) by a cross-cut peeling test conducted in conformity to ISO 2409: 1992 is 80% or more. The residual rate of the cured film (A) and the cured film (B) by a cross-cut peeling test conducted in conformity to ISO 2409: 1992 is preferably 100%. The residual rate here means the residual rate of the cured film (A) and the cured film (B) remaining on the resin sheet without peeling off after the cross-cut peeling test.
The resin product of the invention is preferably a transparent sheet having a total light transmittance of 88% or more and a haze of 1% or less from the viewpoint of being able to be used in various kinds of optical applications. It is more preferably that the total light transmittance of the resin product is 91% or more and the haze thereof is 0.5% or less.
The cured film (B) of the resin product of the invention exhibits excellent antifouling durability, and thus a decrease in water contact angle is small when the surface of the cured film is excoriated with a paper wiper or steel wool. The paper wiper here refers to the paper to be used when wiping off dirt or a spilled liquid. Examples of the paper wiper may include the "KIMTOWEL", "KIMWIPE", "WYPALL", "KAYDRY" (trade names, manufactured by NIPPON PAPER CRECIA Co., LTD.), the "UESUPA" (trade name, TOYO PAPER MFG. CO., LTD.), and the "Servoil" (trade name, S.T. CORPORATION). In addition, the water contact angle is a value obtained by dropping one drop of water to be 0.2 μl on the surface of the cured film (B) of the resin product and measuring the contact angle between water and the cured film surface.
In the resin product of the invention, the Martens hardness measured by a method in conformity to ISO-14577-1 is 215 N/mm2 or more and the proportion nIT (%) of the workload of elastic deformation with respect to the total workload of deformation (the sum of the workload of elastic deformation and the workload of plastic deformation) is preferably 70% or more. The proportion of the workload of elastic deformation increases as nIT is 70% or more, thus the surface tends to be restored when the pencil hardness is measured so that the pencil hardness tends to be higher.
In the invention, the first surface of the cured film (A) may be provided with various kinds of functional layers such as an antireflection layer, an antiglare layer, and an antistatic layer if necessary. The cured film (B) may be various kinds of functional layers.
The antireflection layer is preferably one by which the quantity of reflected light of the light incident in a direction toward the inside of the resin laminate on the surface of the resin laminate is 0% or more and 20% or less of the quantity of incident light, more preferably one by which it is 0% or more and 10% or less, and even more preferably one by which it is 0% or more and 5% or less. Examples of such an antireflection layer may include a low refractive index layer having a refractive index lower than the cured film (A), one having a multi-layered structure having a two-layer structure in which a low refractive index layer is laminated on a high refractive index layer, or one having a multi-layered structure having a three-layer structure in which a medium refractive index layer and a low refractive index layer are sequentially laminated on a high refractive index layer.
In the case of one having a two-layer structure in which a low refractive index layer is laminated on a high refractive index layer as the antireflection layer, for example, one that has a low refractive index layer having a refractive index of from 1.3 to 1.5 and a high refractive index layer having a refractive index of from 1.6 to 2.0 is preferable. There

is a tendency that the reflected light of incident light can be sufficiently suppressed when the refractive index is in this range.

The film thicknesses of the low refractive index layer and the high refractive index layer are respectively preferably 50 nm or more and more preferably 70 nm or more. In addition, the film thickness of the low refractive index layer and the high refractive index layer is respectively preferably 200 nm or less and more preferably 150 nm or less. The film thickness of the low refractive index layer and the high refractive index layer is respectively preferably 50 nm or more and 200 nm or less and more preferably 70 nm or more and 150 nm or less. There is a tendency that the reflected light having a visually recognized wavelength can be sufficiently suppressed when the film thickness is in this range.

Examples of the component forming the low refractive index layer may include an active energy ray, such as an electron beam, radiation, or ultraviolet light, curable composition and a thermosetting composition. These may be used singly, or a plurality of compounds exhibiting curing property may be used in combination.

Examples of the low refractive index layer having a refractive index of from 1.3 to 1.5 may include a layer that is mainly composed of a siloxane bond and obtained from a condensation polymerization type curable compound such as an alkoxysilane or an alkylalkoxysilane.

Specific examples of the layer mainly composed of a siloxane bond may include those formed from compounds in which some of the siloxane bonds in the siloxane-based resin are substituted with a hydrogen atom, a hydroxyl group, an unsaturated group, or an alkoxy group.

It is possible to contain colloidal silica in the low refractive index layer if necessary in order to decrease the refractive index.

As the colloidal silica, it is possible to use one prepared as a colloidal solution by dispersing at least one kind of fine particles selected from porous silica and non-porous silica in a dispersion medium. Here, the porous silica is silica with a low density in which the inside of particles is porous or hollow and air is contained in the inside. Examples of the refractive index of the porous silica may include a value of from 1.20 to 1.40, but this is lower as compared to a value of from 1.45 to 1.47 of the refractive index of normal silica. In addition, in the invention, it is possible to use colloidal silica of which the surface is treated with a silane coupling agent if necessary.

Examples of the high refractive index layer having a refractive index of from 1.6 to 2.0 may include a metal oxide film obtained through the condensation of a metal alkoxide after being hydrolyzed.

Examples of the metal alkoxide may include those represented by the following Formula (II).

$$M(OR)_m \cdots \qquad (II)$$

(In Formula (II), M represents a metal atom, R represents a hydrocarbon group having from 1 to 5 carbon atoms, and m represents an atomic valence (3 or 4) of the metal atom M.)

As the metal atom M, titanium, aluminum, zirconium, and tin are preferable and titanium is more preferable from the viewpoint of the refractive index of the high refractive index layer.

Specific examples of the metal alkoxide may include titanium methoxide, titanium ethoxide, titanium n-propoxide, titanium isopropoxide, titanium n-butoxide, titanium isobutoxide, aluminum ethoxide, aluminum isopropoxide, aluminum butoxide, aluminum t-butoxide, tin t-butoxide, zirconium ethoxide, zirconium n-propoxide, zirconium isopropoxide, and zirconium n-butoxide.

In the invention, those obtained by dispersing at least one kind of fine particles selected from $ZrO_2$, $TiO_2$, NbO, ITO, ATO, $SbO_2$, $In_2O_3$, $SnO_2$, and ZnO of a metal oxide having a high refractive index in the metal oxide film are preferable from the viewpoint of achieving a further increase in refractive index of the metal oxide film.

In the invention, as the high refractive index layer, for example, it is possible to use one obtained by curing one prepared by dispersing metal oxide fine particles having a high refractive index in the ultraviolet-curable mixture for forming the cured film (B) in addition to the metal oxide film. In this case, as the metal oxide fine particles having a high refractive index, those that are subjected to a surface treatment may be used.

Examples of the method for obtaining the resin laminate may include a method including the following step (1) to step (3).

Step (1): a step of forming a resin laminate in which a cured film (A) having a pencil hardness of from 8 to 9H is formed on the first surface of a resin substrate
Step (2): a step of forming a coating film of a curable composition (b) on the surface of the cured film (A) of the resin laminate
Step (3): a step of forming a cured film (B) by curing the coating film of a curable composition (b)

The above step (1) can be a step including the following step (1a) and step (1b).

Step (1a): a step of forming a cured film (A)
Step (1b): a step of forming a resin laminate by coating a raw material for the resin substrate on the cured film (A)

and then polymerizing it

Specific examples of the method for producing a resin laminate may include the following two methods.

(1) A method to obtain a resin laminate by laminating the cured film (A) and the cured film (B) on the surface of a resin sheet in the order
(2) A method to obtain a resin laminate by carrying out the following steps (i) to (iv) in the order

(i) a step of forming a laminated mold by disposing a pattern (X1) in which the cured film (A) is laminated on the surface of a mold and another set of mold (X2) so that they face each other and the cured film (A) is in the inside
(ii) a step of pouring a raw material for the resin substrate into the laminated mold, then subjecting the raw material for the resin substrate to cast polymerization, and then obtaining a mold
(iii) a step of obtaining a resin laminate in which the cured film (A) is formed by removing the two molds from the mold after the cast polymerization
(iv) a step of obtaining a resin laminate by laminating the cured film (B) on the surface facing the surface in contact with the resin substrate of the cured film (A) of the resin laminate

In the invention, the cured film (A) may be formed in the inner face of one pattern or in the inner face of two patterns.
Hereinafter, the above method of (2) will be further described.
Examples of the mold may include a metal mold, glass, and a sheet.
The face on which the cured film (A) is laminated of the mold has preferably a smooth surface.
Examples of the material for the mold may include stainless steel, glass, and a resin.
The mold to be used for the pattern (X1) and the pattern (X2) may be the same material or different materials.
Examples of the method for producing a laminated mold may include the following method.
First, the pattern (X1) and the pattern (X2) are disposed so that they face each other and the cured film (A) is in the inside. Subsequently, the space formed between the peripheral portion of the pattern (X1) and the peripheral portion of the pattern (X2) are sealed by providing a gasket to fabricate a laminated mold having a space with a constant volume in the inside of the laminated mold consisting of the pattern (X1) and the pattern (X2).
Examples of the cast polymerization method of the raw material for the resin substrate may include a cell casting method in which the raw material for the resin substrate is poured into the laminated mold and then heated.
As the cast polymerization method of the raw material for the resin substrate, a continuous cast polymerization method using a stainless steel endless belt may also be mentioned as a preferred method in addition to the method described above. In the continuous cast polymerization method, a laminated stainless endless belt having the cured film (A) laminated on the surface and another stainless steel endless belt are disposed so that they face each other. The ends of both sides of these stainless steel endless belts are sealed with the same gasket as the gasket described above to form a space. The two laminated stainless steel endless belts are allowed to travel at the same velocity in the same direction, and the raw material for the resin sheet is continuously poured upstream in the space and heated to continuously polymerize the raw material for the resin substrate.
Examples of the heating method of the raw material for the resin substrate may include a method to heat the laminated mold into which the raw material for the resin substrate is poured by using a heat source such as hot water at from 30 to 98°C. In addition, it is possible to further subject the laminated mold to a heat treatment in an air atmosphere by using a heat source such as a far-infrared heater under a condition of from 90 to 150°C if necessary in order to increase the rate of polymerization of the resin sheet in the laminated mold. In addition, it is possible to subject the laminated mold to a cooling treatment such as air blowing after the heat treatment if necessary. The polymerization time may be appropriately determined in accordance with the progress of the polymerization curing.
The heating time is, for example, from 3 minutes to 24 hours.
A specific example of the case of forming an antireflection layer or an antiglare layer on the first surface of the cured film (A) as a functional layer will be described below.
Examples of the method for forming the antireflection layer may include a casting method, a roller coating method, a bar coating method, a spray coating method, an air knife coating method, a spin coating method, a flow coating method, a curtain coating method, a film covering method, and a dipping method.
In a case in which an antiglare layer is laminated on the first surface of the cured film (A), it is possible to suppress the reflection of external light by at least one method of a method to form fine irregularities on the first surface of the antiglare layer or a method to lead external light to diffused reflection through internal scattering by adding light-diffusing fine particles into the antiglare layer. The first surface of the antiglare layer refers to the surface facing the surface in contact with the first surface of the cured film (A) of the antiglare layer.
Examples of the method for forming the antiglare layer may include the following method.

First, a composition for forming an antiglare layer is coated on the face having a fine irregular shape of an active energy ray transmissive film having a fine irregular shape and cured to obtain an active energy ray transmissive film on which an antiglare layer is laminated. Thereafter, the active energy ray transmissive film on which an antiglare layer is laminated is laminated on a resin laminate to be described later so that the surface of the antiglare layer is in contact with the first surface of the cured film (A) of the resin laminate, and the active energy ray transmissive film is peeled off therefrom to obtain a laminate in which an antiglare layer having a fine irregular-shaped surface is laminated on the surface of the resin laminate.

It is possible to add a mold release agent to the composition for forming an antiglare layer if necessary in order to improve the mold releasing property between the active energy ray transmissive film and the finely irregular face of the antiglare layer.

Examples of the method for forming a fine irregular shape on the surface of the active energy ray transmissive film may include a method to form an irregular shape on the surface itself of the active energy ray transmissive film and a method to provide an irregular shape to the smooth surface of an active energy ray transmissive film by a coating method.

Examples of the method for providing an irregular shape to the surface itself of the active energy ray transmissive film may include a method to knead particles into a resin for forming the active energy ray transmissive film and a method to transfer the fine irregular shape on the surface of a pattern by bringing a resin for forming the active energy ray transmissive film into contact with a pattern having a fine irregular shape in a state in which the resin is heated at a temperature equal to or higher than the glass transition temperature thereof.

Examples of the method for providing an irregular shape to the smooth surface of an active energy ray transmissive film by a coating method may include a method to coat an antiglare coating agent and a method in which a coating composition is poured between an active energy ray transmissive film and a pattern having a fine irregular surface, cured, and then peeled off from the pattern (2P method).

Examples of the method for fabricating a pattern having a fine irregular surface may include a method to form a fine irregular shape by a method such as a sandblasting method, a chemical etching method, or a lithographic method. The shape of the pattern is preferably a roll shape from the viewpoint of having a favorable productivity.

## EXAMPLES

Hereinafter, the invention will be described in more detail with reference to Examples. Incidentally, various kinds of evaluations in Examples were carried out by the following methods. In addition, the term "parts" in the following description represents "parts by mass".

### (1) Film thickness of cured film

The sample having a width of 100 nm was cut out from the resin laminate in the thickness direction thereof by using a microtome, the cross section of the resin laminate was observed by using a transmission electron microscope (JEM-1010 (trade name) manufactured by JEOL Ltd.), the film thickness of the cured film (A) and the cured film (B) was measured.

At: Film thickness of cured film (A)
Bt: Film thickness of cured film (B)

### (2) Total light transmittance and haze

By using the HAZE METER NDH4000 (trade name) manufactured by NIPPON DENSHOKU INDUSTRIES Co., LTD., the total light transmittance of the resin laminate was measured in conformity to the measurement method presented in ISO 13468-1: 1996, and the haze of the resin laminate was measured in conformity to the measurement method presented in ISO 14 782: 1999.

### (3) Pencil hardness

The pencil hardness of the cured film (B) of the resin laminate was measured in conformity to ISO 2409: 1992, and the surface hardness thereof was evaluated. The surface hardness was evaluated for the cured film (A) of the resin laminate in the case of Examples in which the resin laminate did not include the cured film (B).

### (4) Contact angle

In an environment of 23 °C and a relative humidity of 50%, one drop of water to be 0.2 μL was dropped on the

surface of the cured film (B) of the resin laminate, and the contact angle of water with respect to the surface of the cured film (B) of the resin laminate was determined by using a portable contact angle meter (trade name: PG-X manufactured by Testing Machines, Inc.). The contact angle was evaluated for the cured film (A) of the resin laminate in the case of Examples in which the resin laminate did not include the cured film (B).

The triolein contact angle was determined in the same manner as in the case of measuring the water contact angle except that triolein was used instead of water.

(5) Residual rate of the cured film

The residual rate of the cured film (A) and the cured film (B) remaining on the surface of the resin laminate when the cross-cut peeling test was conducted in conformity to ISO 2409: 1992 was evaluated. The residual rate was evaluated for the cured film (A) of the resin laminate in the case of Examples in which the resin laminate did not include the cured film (B). The residual rate was evaluated for the cured film (B) of the resin laminate in the case of Examples in which the resin laminate did not include the cured film (A).

(6) Excoriation resistance

The excoriation resistance of the cured film (B) of the resin laminate was evaluated by the difference □ haze (%) in haze value before and after the excoriation test to be described below. The excoriation test was conducted by placing a circular pad which was fitted with #000 steel wool (trade name: Bonstar No. 000 manufactured by NIPPON STEEL WOOL Co., Ltd.) and had a diameter of 24 mm on the surface on the cured film (B) side of the resin laminate and reciprocating it 100 times at a distance of 20 mm and a load of 2,000 g.

$$[\text{Excoriation resistance } (\Delta \text{ haze } (\%))] = [\text{haze value after excoriation } (\%)] - [\text{haze value before excoriation } (\%)]$$

The excoriation resistance was evaluated for the cured film (A) of the resin laminate in the case of Examples in which the resin laminate did not include the cured film (B).

(7) Antifouling durability to paper wiper

The antifouling durability was determined by the following method, and it was evaluated by the rate of change in contact angle (water contact angle decreasing rate) of water with respect to the surface of the cured film (B) of the resin laminate before and after excoriation. The back surface of one sheet (380 mm $\times$ 330 mm) of the "KIMTOWEL" (trade name, manufactured by NIPPON PAPER CRECIA Co., LTD.) was attached to the surface of a circular pad having a diameter of 24 mm by using double-sided tape, subsequently the "KIMTOWEL" was cut into a size having a diameter of 24 mm from the center of the circular pad. The surface of the "KIMTOWEL" attached to the circular pad which was fitted with the "KIMTOWEL" and had a diameter of 24 mm was placed on the surface of the cured film of the resin laminate and reciprocated 2000 times at a distance of 60 mm and a load of 500 g to excoriate the surface of the cured film of the resin laminate, and the proportion (water contact angle decreasing rate) of change in contact angle of water with respect to the cured film on the surface of the resin laminate before and after the test was determined by the following Equation (3). Incidentally, the contact pressure of the surface of the "KIMTOWEL" applied to the cured film was 110 g/cm$^2$. It was judged that the antifouling durability was favorable in a case in which the water contact angle decreasing rate was 10% or less.

$$\text{Water contact angle decreasing rate } (\%) = (A - B)/A \times 100 \quad \cdots \quad (3)$$

A: Water contact angle (°) of cured film before excoriation
B: Water contact angle (°) of cured film after excoriation

The antifouling durability was evaluated for the cured film (A) of the resin laminate in the case of Examples in which the resin laminate did not include the cured film (B).

(8) Antifouling durability to SW

The antifouling durability to steel wool (also referred to as SW) was determined in the same manner as the case of antifouling durability to paper wiper except that ❒000 steel wool (trade name: Bonstar No. 000 manufactured by NIPPON STEEL WOOL Co., Ltd.) was used. It was judged that the antifouling durability was favorable in a case in which the water contact angle decreasing rate was 15% or less.

(9) Martens hardness and proportion of workload of elastic deformation to total workload of deformation

The Martens hardness of the resin laminate surface and the proportion of the workload of elastic deformation with respect to the total workload of deformation (the sum of the workload of elastic deformation and the workload of plastic deformation) were measured by using an ultra-micro hardness testing instrument (trade name: Fischer scope HM2000 manufactured by Thermo Fisher Scientific Inc.) by the method confirming to ISO-14577-1 under the measurement conditions to be described below.

Indenter shape: Vickers indenter (a =136°),
Measurement environment: temperature of 23 °C and relative humidity of 50%,
Maximum testing load: 100 mN,
Load velocity: 100 mN/5 seconds,
Maximum load creeping time: 10 seconds, and
Unloading velocity: 100 mN/5 seconds.

nIT (%) was determined by the following Equation (4).

$$nIT = \text{workload of elastic deformation/workload of total deformation} \cdots (4)$$

(10) Appearance of cured film

The surface of the resin laminate was visually observed to confirm the presence or absence of surface defects.

"⊙": There are no surface defects of 0.1 $mm^2$ or more per 1 $m^2$
"○": There are surface defects of 0.1 $mm^2$ or more and less than 0.25 $mm^2$ per 1 $m^2$
"Δ": There are surface defects of 0.25 $mm^2$ or more and less than 1 $mm^2$ per 1 $m^2$
"×": There are surface defects of 1 $mm^2$ or more per 1 $m^2$

The abbreviations in the following description represent the following compounds.

Polyacrylate 1: mixture of dipentaerythritol hexaacrylate (60 to 70% by mass) with dipentaerythritol pentaacrylate (40 to 30% by mass).
Polyacrylate 2: mixture of pentaerythritol triacrylate (50 to 70% by mass) with pentaerythritol tetraacrylate (50 to 30% by mass)
Polyacrylate 3: trimethylolpropane triacrylate
Urethane acrylate 1: urethane compound obtained by reacting hexamethylene diisocyanate with dipentaerythritol pentaacrylate
UN-2300: urethane acrylate compound (trade name manufactured by Negami Chemical Industrial Co., Ltd.)
Diacrylate 1: 1,6-hexanediol diacrylate
BEE: benzoin ethyl ether
OPTOOL DAC-HP: mixture of 20% by mass of perfluoropolyether (meth)acrylate with 50% by mass of 1,1,2,2,3,3,4-heptafluorocyclopentane and 30% by mass of propylene glycol monomethyl ether (trade name, manufactured by DAIKIN INDUSTRIES, Ltd.)
Fluorine-based acrylate 1: 1,10-bis(meth)acryloyloxy-2,2,3,3,4,4,5,5,6,6,7,7,8,8,9,9-hexadecafluorodecane
SURURIA S: isopropyl alcohol (IPA) dispersion (solid concentration: 20%) of hollow silica sol (trade name, manufactured by JGC C&C)
Silane compound 1: aminopropyltrimethoxysilane
Silane Compound 2: 3-methacryloxypropyltrimethoxysilane
DEMA: diethylaminoethyl methacrylate

NBMA: N-n-butoxymethylacrylamide
HCPK: 1-hydroxycyclohexyl phenyl ketone
TPO: diphenyl-(2,4,6-trimethylbenzoyl)phosphine oxide
Silica fine particle solution 1: mixture of 30% of silica fine particles (average particle size: 50 nm) with 70% of methyl ethyl ketone
PGM: propylene glycol monomethyl ether
IPA: isopropyl alcohol
Fluorine-based solvent 1: 1,1,2,2,3,3,4-heptafluorocyclopentene
BYK-325: polyether-modified polymethylalkylsiloxane solution (trade name, manufactured by BYK)
BYK-322: aralkyl-modified polymethylalkylsiloxane solution (trade name, manufactured by BYK)
BYK-UV 3505: dimethylpolysiloxane having acrylic group (trade name, manufactured by BYK)

[Production Example 1]

Production of silica sol (1) subjected to hydrolysis treatment and condensation reaction treatment

Into a four-necked flask reaction vessel equipped with a stirrer and a cooling tube, 63 g of the SURURIA S was introduced, and subsequently 12 g of the silane compound 2 was added thereto. Thereafter, 4.4 g of water and 0.1 g of a 0.01 mol/L aqueous solution of hydrochloric acid were sequentially added thereto while stirring, and the mixture was heated for 2 hours at 80°C.

Subsequently, the reaction system was put in a reduced pressure state, the volatile component was distilled off until to have a solid concentration of 40%, 38 g of toluene was added to the reaction system, and the mixture was heated for 2 hours at 80°C.

Thereafter, the reaction system was put in a reduced pressure state, the volatile component was distilled off until to have a solid concentration of 60%, and the resultant was heated for 2 hours at 80°C, thereby obtaining silica sol (1) subjected to a hydrolysis treatment and a condensation reaction treatment.

The silica sol (1) thus obtained was a cloudy liquid, and the solid concentration thereof was 60%. Incidentally, the solid concentration was determined from the weight difference before and after drying through calculation after drying the silica sol (1) through heating for 3 days in an environment of 80°C.

[Example 1]

A curable composition (a) was obtained by mixing the polyacrylate 1; 20 parts, the polyacrylate 2; 45 parts the diacrylate 1; 35 parts, and BEE; 1.5 parts.

A SUS304 plate having a mirror surface was used as a mold, the curable composition (a) was coated on the mirror surface of the mold, a PET film having a thickness of 12 μm was covered thereon, thereby obtaining a film before curing (A-1).

A rubber roll having the JIS hardness of 40° was pressed on the PET film of the film before curing (A-1) so as not to contain air bubbles while squeezing out the excess curable composition (a), thereby obtaining a film before curing (A-2). Subsequently, the film before curing (A-2) was allowed to pass through a position at 20 cm below a fluorescent ultraviolet lamp (trade name: FL40BL manufactured by TOSHIBA CORPORATION) having an output of 40 W at a velocity of 2 m/min such that the PET film surface of the film before curing (A-2) was the top to cure the curable composition (a), thereby obtaining a film after curing (A-3). Thereafter, the PET film was peeled off from the film after curing (A-3), thereby obtaining a cured film (A-4).

Subsequently, the cured film (A-4) was allowed to pass through a position at 20 cm below a high pressure mercury lamp having an output of 30 W at a velocity of 3 m/min such that the cured film portion was the top to further cure the cured film (A-4) by irradiating it with ultraviolet light, thereby obtaining a laminated mold (X) in which the cured film (A-4) of the curable composition (a) having a film thickness of 30 μm was laminated on the mold surface. The laminated mold (X) and a SUS304 plate on which the cured film (A-4) was not formed were allowed to face each other so that the cured film (A-4) of the laminated mold (X) was in the inside, and the peripheral portions of these two SUS304 plates were sealed with a soft gasket made of polyvinyl chloride, thereby fabricating a laminated mold (Y).

Subsequently, a raw material (Z) for a resin sheet containing 100 parts of a mixture containing 20 parts of polymethyl methacrylate having a mass average molecular weight of 220,000 and 80 parts of methyl methacrylate, 0.01 part of 2-(5-methyl-2-hydroxyphenyl)-benzotriazole, 0.05 part of azobisdimethylvaleronitrile, and 0.005 part of sodium dioctyl sulfosuccinate was injected into this laminated mold (Y) after the dissolved air was removed therefrom under a reduced pressure and polymerized for 1 hour in a water bath at 80°C and then for 1 hour in an air oven at 130°C. After cooling, the SUS304 plates were peeled off from the laminated mold (Y), thereby obtaining a resin laminate (C-1) having a thickness of 1 mm and the cured film (A-4) on one surface thereof.

A curable composition (b) was obtained by mixing the polyacrylate 1; 100 parts, the OPTOOL DAC-HP; 20 parts, the silane compound 1; 5 parts, HCPK; 5 parts, the BYK-325; 0.3 part, and PGM; 2131.5 parts. The curable composition (b) prepared in the above was coated on the surface on which the cured film (A-4) was formed of the resin laminate (C-1) by using a bar coater, thereby obtaining a resin laminate (C-2).

Subsequently, the resin laminate (C-2) was dried for 10 minutes in a hot air drying oven at 70°C and irradiated with ultraviolet light in an accumulated light quantity of 600 mJ/$cm^2$ (energy quantity of ultraviolet light having a wavelength of from 320 to 380 nm) by using a high pressure mercury lamp, thereby obtaining a resin laminate (C-3) having a cured film with a film thickness of 1.5 μm.

The resin laminate (C-3) thus obtained was subjected to the evaluation on the total light transmittance, haze, pencil hardness, contact angle, and residual rate and antifouling durability of the cured film by the evaluation methods described above. The evaluation results thereof are presented in Table 1.

The pencil hardness of the cured film (B) of the resin laminate (C-3) was 8H, the contact angle of water with respect to the cured film (B) was 109°, the resin laminate (C-3) had excellent surface hardness and exhibited an exhibited excellent transparency, and adhesive property between the resin sheet and the cured film (A) and cured film (B) and favorable excoriation resistance and antifouling durability.

[Table 1]

Table 1

| | | | Example 1 | Example 2 | Example 3 | Example 4 | Example 5 | Example 6 | Example 7 | Example 8 | Example 9 | Example 10 | Comparative Example 1 | Comparative Example 2 | Comparative Example 3 | Comparative Example 4 | Comparative Example 5 | Comparative Example 6 |
|---|---|---|---|---|---|---|---|---|---|---|---|---|---|---|---|---|---|---|
| Composition of curable composition (a) (parts) | (a1) component | Polyacrylate 1 | 20 | 20 | 50 | 20 | 20 | 30 | 20 | 20 | 30 | 20 | – | 20 | 20 | 20 | – | 20 |
| | | Polyacrylate 2 | 45 | 45 | – | 45 | 45 | 30 | 45 | 45 | 30 | 45 | – | 45 | 45 | 45 | – | 45 |
| | | Polyacrylate 3 | – | – | 30 | – | – | – | – | – | – | – | – | – | – | – | 50 | – |
| | (a2) component | Diacrylate 1 | 35 | 35 | 20 | 35 | 35 | 30 | 35 | 35 | 30 | 35 | – | 35 | 35 | 35 | 50 | 35 |
| | (a3) component | BEE | 1.5 | 1.5 | 1.5 | 1.5 | 1.5 | 1.5 | 1.5 | 1.5 | 1.5 | 1.5 | – | 1.5 | 1.5 | 1.5 | 1.5 | 1.5 |
| Composition of curable composition (b) (parts) | (b1) component | Polyacrylate 1 | 100 | – | 100 | 30 | 30 | – | – | – | – | – | – | – | – | – | 100 | 100 |
| | | Polyacrylate 2 | – | 100 | – | – | – | 100 | – | – | – | – | 100 | – | 50 | 100 | – | – |
| | | Polyacrylate 3 | – | – | – | 35 | 35 | – | – | – | – | – | – | – | 50 | – | – | – |
| | | Urethane acrylate 1 | – | – | – | – | – | – | 100 | 100 | – | | – | – | – | – | – | – |
| | | UN-2300 | – | – | – | – | – | – | – | – | – | 100 | – | – | – | – | – | – |
| | | Diacrylate 1 | – | – | – | 25 | 25 | – | – | – | – | – | – | – | – | – | – | – |
| | (b2) component | OPTOOL DAC-HP (solids) | 4 | 2 | 3 | 0.4 | 0.4 | – | 2 | 12 | 47.5 | 2 | 2 | – | 2 | 2 | 3 | 0.05 |
| | | Fluorine-based acrylate 1 | – | – | – | – | – | 5 | – | – | – | – | – | – | – | – | – | – |
| | (b3) component | Silane compound 1 | 5 | – | 12 | – | – | – | – | – | 2.5 | – | – | – | – | – | 5 | 5 |
| | | DEMA | – | 2.5 | – | 5 | – | 2.5 | – | – | – | – | 2.5 | – | 0.5 | 20 | – | – |
| | | NBMA | – | – | – | – | 2 | – | – | – | – | – | – | – | – | – | – | – |
| | Polymerization initiator (b4) | HCPK | 5 | 5 | 5 | – | – | 5 | 5 | 5 | – | 5 | 5 | – | 5 | 5 | 5 | 5 |
| | | TPO | – | – | – | 2 | 2 | – | – | – | – | – | – | – | – | – | – | – |
| | (b5) component | Silica fine particle solution 1 (solids) | – | – | – | 5 | 8 | – | – | – | – | – | – | – | – | – | – | – |
| | | Silica sol (1) (solids) | – | – | – | – | – | – | – | – | 50 | – | – | – | – | – | – | – |
| | (b6) component | BYK-325 | 0.3 | 0.2 | 0.05 | – | – | – | – | – | – | – | – | – | – | – | – | 1 |
| | | BYK UV3505 | – | – | – | – | – | – | 0.2 | 0.2 | – | 0.5 | – | – | – | – | – | – |
| | (Others) | PGM | 2139.5 | 980.5 | 2272.5 | – | – | 977.5 | 3 | 18 | 980.5 | 3 | 980.5 | – | 980.5 | 980.5 | 2139.5 | 2139.5 |
| | | Ethyl acetate | – | – | – | – | – | – | 300 | 300 | – | 350 | – | – | – | – | – | – |
| | | IPA | – | – | – | – | – | – | 150 | 150 | – | 250 | – | – | – | – | – | – |
| | | Toluene | – | – | – | – | – | – | 150 | 150 | – | | – | – | – | – | – | – |
| | | Fluorine-based solvent 1 | 7.5 | 5 | 7.5 | – | – | – | 5 | 30 | – | 5 | 5 | – | 5 | 5 | 7.5 | 7.5 |
| Evaluation of resin laminate | Film thickness of cured film (A) (mm) | | 30 | 35 | 42 | 23 | 35 | 30 | 27 | 27 | 30 | 30 | – | 25 | 25 | 25 | 40 | 30 |
| | Film thickness of cured film (B) (mm) | | 1.5 | 2.0 | 0.5 | 8.0 | 6.0 | 2.5 | 1.2 | 1.0 | 0.1 | 1.2 | 3.0 | – | 1.2 | 2.5 | 1.2 | 2.0 |
| | A/B | | 20.0 | 17.5 | 84 | 2.9 | 5.8 | 12 | 22.5 | 27.0 | 0.003 | 25.0 | – | – | 20.8 | 10.0 | 33.3 | 15.0 |
| | Total light transmittance of resin laminate (%) | | 91.9 | 91.9 | 92.0 | 92.1 | 92.3 | 91.8 | 91.9 | 92.1 | 94.5 | 91.9 | 92.0 | 92.0 | 91.9 | 91.9 | 92.1 | 92.0 |
| | Haze of resin laminate (%) | | 0.15 | 0.17 | 0.20 | 0.19 | 0.19 | 0.18 | 0.20 | 0.32 | 0.45 | 0.16 | 0.14 | 0.10 | 0.20 | 0.20 | 0.16 | 0.15 |
| | Pencil hardness of resin laminate | | 8H | 9H | 8H | 8H | 8H | 8H | 8H | 8H | 8H | 7H | 5H | 8H | 5H | 5H | 5H | 8H |
| | Water contact angle of resin laminate (degrees) | | 109 | 108 | 104 | 102 | 103 | 97 | 107 | 112 | 110 | 105 | 104 | 78 | 104 | 107 | 104 | 89 |
| | Triolein contact angle of resin laminate (degrees) | | 70 | 70 | 69 | 65 | 65 | 48 | 71 | 71 | 75 | 70 | 68 | 18 | 70 | 68 | 67 | 45 |
| | Excoriation resistance of resin laminate (%) | | 0.20 | 0.65 | 0.65 | 0.20 | 0.10 | 0.25 | 0.2 | 1.05 | 1.5 | 0.78 | 0.15 | 0.10 | 0.14 | 2.50 | 0.20 | 0.20 |
| | Residual rate of cured film (%) | | 100 | 100 | 100 | 75 | 94 | 85 | 100 | 100 | 100 | 100 | 70 | 100 | 0 | 100 | 100 | 100 |
| | Antifouling durability to paper wiper(%) | | 3.7 | 4.8 | 3.8 | 2.9 | 4.8 | 14.0 | 3.5 | 4.8 | 18.2 | 2.9 | 3.8 | 0 | 4.8 | 12 | 3.8 | 3.7 |
| | Antifouling durability to SW (%) | | 13.2 | 11.7 | 16.3 | 11.7 | 12.6 | 19.6 | 10.4 | 16.3 | 22.3 | 15.2 | 13.2 | 0 | 14.5 | 22.3 | 12.6 | 4.8 |
| | Martens Hardness (N/mm$^2$) | | 230 | 240 | 220 | 225 | 215 | 220 | 238 | 243 | 220 | 220 | 200 | 240 | 230 | 220 | 210 | 230 |
| | nIT(%) | | 77 | 78 | 75 | 60 | 77 | 75 | 78 | 77 | 70 | 75 | 47 | 77 | 75 | 70 | 75 | 76 |
| | Appearance of resin laminate * 1 | | | | r | | | r | | | r | | I | | I | I | I | |

[Examples 2, 3, and 6 to 10 and Comparative Examples 3 to 6]

As the curable composition (a) and the curable composition (b), those having the compositions presented in Table 1 were used. The resin laminates were obtained by the same method as in Example 1 except this. The evaluation results thereof are presented in Table 1.

[Examples 4 and 5]

A resin laminate (D-1) having a thickness of 1 mm and the cured film (A) on the first surface of the resin substrate was obtained by the same method as in Example 1 except that one having the composition presented in Table 1 was used as the curable composition (b). Incidentally, the OPTOOL DAC-HP and the silica fine particles 1 were used after the organic solvent was evaporated therefrom by an evaporator. The above curable composition (b) was coated on the surface of the face on which the cured film (A) was formed of the resin laminate (D-1).

Subsequently, the copolymer film of tetrafluoroethylene with hexafluoropropylene "NEOFLON FEP" (trade name, manufactured by DAIKIN INDUSTRIES, Ltd.) was pasted to the resin laminate (D-1) so as to be in contact with the surface coated with the curable composition (b), and the resultant passed under a press roll at a velocity of 2.5 m/min to conduct a lamination treatment so that the film thickness of the film before curing (B-1) of the curable composition (b) was the film thickness presented in Table 1.

Subsequently, the resin laminate (D-2) in which the resin laminate (D-1), the film before curing (B-1), and the NEOFLON FEP were sequentially laminated was held for 1 minute. Thereafter, the resin laminate (D-2) thus obtained was allowed to pass through a position at 24 cm below a metal halide lamp having an output of 120 W/cm at a velocity of 2.5 m/min to cure the film before curing (B-1), thereby obtaining a resin laminate (D-3).

Thereafter, the NEOFLON FEP was peeled off from the resin laminate (D-3), thereby obtaining a resin laminate (D-4). The evaluation results thereof are presented in Table 1.

[Comparative Example 1]

A resin laminate (E-1) was obtained by coating one having the composition presented in Table 1 as the curable composition (b) on the face on which a hard coat layer was not formed of the methacrylic resin sheet "ACRYLITE MR100" (trade name, manufactured by Mitsubishi Rayon Co., Ltd.) by using a bar coater.

Subsequently, the resin laminate (E-1) was dried for 10 minutes in a hot air drying oven at 70°C and irradiated with ultraviolet light in an accumulated light quantity of 600 $mJ/cm^2$ (energy quantity of ultraviolet light having a wavelength of from 320 to 380 nm) by using a high pressure mercury lamp, thereby obtaining a resin laminate (E-3) having a cured film (B) with a film thickness of 3 $\mu$m. The evaluation results thereof are presented in Table 1.

The resin laminate of Comparative Example 1 had a low pencil hardness since the cured film (A) was not laminated in the resin laminate.

[Comparative Example 2]

A resin laminate (F-1) in which the cured film (A) was laminated was obtained by the same method as in Example 1 except that the cured film (B) was not formed. The evaluation results thereof are presented in Table 1.

The resin laminate of Comparative Example 2 had a low contact angle of water with respect to the cured film (A) of 78 degrees since the cured film (B) was not laminated in the resin laminate.

INDUSTRIAL APPLICABILITY

The invention provides a resin product which has an excellent surface hardness and exhibits excellent water repellency and adhesive property. Moreover, an object of the invention is to provide a resin product which exhibits excellent excoriation resistance and antifouling durability.

EXPLANATIONS OF LETTERS OR NUMERALS

10 Resin product
11 Resin substrate
12 Cured film (A)
13 Cured film (B)

**Claims**

1. A resin product, wherein
a surface of the resin product has a water contact angle of 90 degrees or more and a pencil hardness of 8H or more.

2. The resin product according to claim 1, comprising a cured film on a surface.

3. The resin product according to claim 1 or 2, wherein a residual rate of a cured film by a cross-cut peeling test conducted in conformity to ISO 2409: 1992 is 80% or more.

4. The resin product according to claim 1 or 2, wherein the resin product is a resin product comprising a cured film (A) on the whole or a portion of a surface of a resin substrate and a cured film (B) on a surface facing a surface in contact with the resin substrate of the cured film (A), and
the surface having a water contact angle of 90 degrees or more and a pencil hardness of 8H or more is a surface of the cured film (B).

5. A resin product comprising:

a cured film (A) on the whole or a portion of a surface of a resin substrate; and
a cured film (B) on a surface facing a surface in contact with the resin substrate of the cured film (A), wherein
a surface of the cured film (B) has a water contact angle of 90 degrees or more,
a surface of the cured film (B) has a pencil hardness of 7H or more, and
a residual rate of the cured film (A) and the cured film (B) by a cross-cut peeling test conducted in conformity to ISO 2409: 1992 is 80% or more.

6. The resin product according to claim 4 or 5, wherein the resin product satisfies the following Equations (1) and (2):

$$3 \leq At/Bt \leq 80 \cdots \quad (1)$$

$$20\ \mu m \leq At \leq 40\ \mu m \quad \cdots \quad (2)$$

(where At denotes the thickness of the cured film (A) and Bt denotes the thickness of the cured film (B)).

7. The resin product according to any one of claims 1 to 6, wherein a water contact angle decreasing rate calculated by the following Equation (3-1) after a surface of the resin product is excoriated back and forth 1000 times with a paper wiper at a pressure of 110 g/cm2 is 10% or less:

$$\text{Water contact angle decreasing rate} \quad (\%) = (A1 - B1)/A1 \times 100 \quad \cdots \quad (3\text{-}1)$$

(where A1 denotes the water contact angle (°) of the surface before excoriation and B1 denotes the water contact angle (°) of the surface after excoriation).

8. The resin product according to any one of claims 1 to 7, wherein a water contact angle decreasing rate calculated by the following Equation (3-2) after a surface of the resin product is excoriated back and forth 1000 times with #000 steel wool at a pressure of 110 g/$cm^2$ is 15% or less:

$$\text{Water contact angle decreasing rate} \quad (\%) = (A2 - B2)/A1 \times 100 \quad \cdots \quad (3\text{-}2)$$

(where A2 denotes the water contact angle (°) of the surface before excoriation and B2 denotes the water contact angle (°) of the surface after excoriation).

9. The resin product according to any one of claims 1 to 8, wherein a surface of the resin product has the Martens hardness of 215 N/mm2 or more and nIT calculated by the following Equation (4) is 70% or more.

$$nIT\ (\%) = (\text{workload of elastic deformation})/(\text{workload of elastic deformation} + \text{workload of plastic deformation}) \times 100 \quad \cdots \quad (4)$$

10. The resin product according to any one of claims 1 to 9, wherein a surface of the resin product has a triolein contact angle of 50 degrees or more.

11. The resin product according to any one of claims 1 to 10, wherein a surface of the resin product has a water contact angle of 100 degrees or more.

12. The resin product according to any one of claims 1 to 11, wherein the resin product has antireflection performance.

13. The resin product according to any one of claims 4 to 12, wherein the cured film (B) is a cured film (B) obtained by curing a curable composition (b) containing a compound (b1) having a (meth)acryloyloxy group in the molecule, a fluorine-containing compound (b2) having an active energy ray reactive group, and a polymerization initiator (b4).

14. The resin product according to claim 13, wherein the compound (b1) having a (meth)acryloyloxy group in the molecule is a compound having three or more (meth)acryloyloxy groups in the molecule.

15. The resin product according to claim 13 or 14, wherein the compound (b1) having a (meth)acryloyloxy group in the molecule is urethane (meth)acrylate.

16. The resin product according to any one of claims 13 to 15, wherein the fluorine-containing compound (b2) having an active energy ray reactive group is a perfluoropolyether (meth)acrylate.

17. The resin product according to any one of claims 13 to 16, wherein the fluorine-containing compound (b2) having an active energy ray reactive group is from 0.1 to 10 parts by mass with respect to 100 parts by mass of the compound (b1) having a (meth)acryloyloxy group in the molecule.

*FIG. 1*

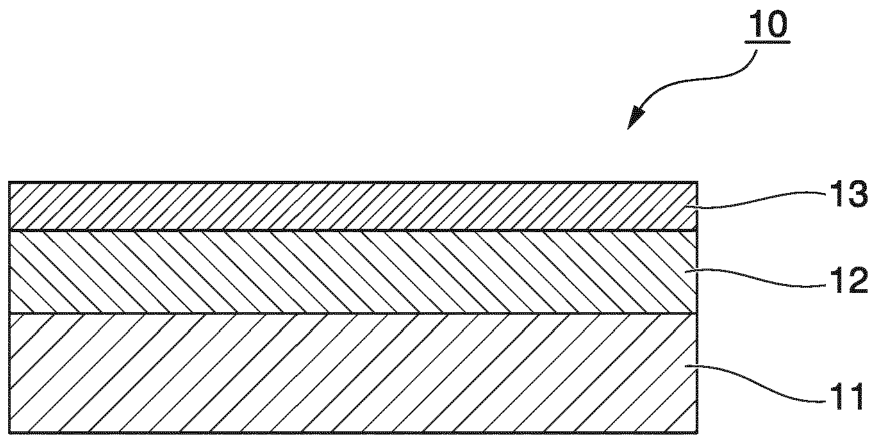

## INTERNATIONAL SEARCH REPORT

International application No.
PCT/JP2015/065555

A. CLASSIFICATION OF SUBJECT MATTER
*C08J7/04*(2006.01)i, *B32B27/30*(2006.01)i

According to International Patent Classification (IPC) or to both national classification and IPC

B. FIELDS SEARCHED

Minimum documentation searched (classification system followed by classification symbols)
C08J7/04-7/06, B32B1/00-43/00, C09D1/00-10/00, 101/00-201/10

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2015 |
| Kokai Jitsuyo Shinan Koho | 1971-2015 | Toroku Jitsuyo Shinan Koho | 1994-2015 |

Electronic data base consulted during the international search (name of data base and, where practicable, search terms used)
CAplus(STN)

C. DOCUMENTS CONSIDERED TO BE RELEVANT

| Category* | Citation of document, with indication, where appropriate, of the relevant passages | Relevant to claim No. |
|---|---|---|
| X | JP 2007-8967 A (Dow Corning Toray Co., Ltd.), 18 January 2007 (18.01.2007), 0001, 0014; examples 1 to 3 & WO 2002/062910 A2 & US 2004/0050297 A1 & EP 1360253 A2 | 1-5,7-12 |
| X | JP 9-316395 A (Mitsubishi Chemical Corp.), 09 December 1997 (09.12.1997), 0001, 0123; examples 2, 5 (Family: none) | 1-5,7-12 |
| P,X | JP 2014-151588 A (The Nippon Synthetic Chemical Industry Co., Ltd.), 25 August 2014 (25.08.2014), 0001; examples 2 to 4 (Family: none) | 1-5,7-12 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 06 August 2015 (06.08.15) | 18 August 2015 (18.08.15) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (July 2009)

**INTERNATIONAL SEARCH REPORT**

International application No.
PCT/JP2015/065555

C (Continuation). DOCUMENTS CONSIDERED TO BE RELEVANT

| Category* | Citation of document, with indication, where appropriate, of the relevant passages | Relevant to claim No. |
|---|---|---|
| A | JP 11-300873 A (Dainippon Printing Co., Ltd.), 02 November 1999 (02.11.1999), entire references & US 6329041 B1 & TW 574106 B | 1-17 |
| P,A | WO 2014/184983 A1 (Mitsubishi Rayon Co., Ltd.), 20 November 2014 (20.11.2014), entire references & TW 201444686 A | 1-17 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2014111806 A
- JP 2014228518 A
- JP 2002190136 A
- JP 2001270050 A
- JP 11029720 A
- JP 2012250353 A